# EUROPEAN PATENT SPECIFICATION

(11) **EP 3 117 794 B1**
(45) Date of publication and mention of the grant of the patent: **09.08.2017**
(21) Application number: 15715324.8
(22) Date of filing: 10.03.2015
(51) Int. Cl.: A61C 8/00

(54) **DENTAL IMPLANT PROSTHETIC STRUCTURE**
ZAHNIMPLANTAT PROTHESENSTRUKTUR
STRUCTURE PROSTHETIQUE D'IMPLANT DENTAIRE

(30) Priority: 11.03.2014 ES 201430328
(43) Date of publication of application: 18.01.2017
(73) Proprietor: Implant Protesis Dental 2004 S.L., 08303 Mataró (Barcelona) (ES)
(72) Inventor: PÉREZ YANINI, Juan Carlos, E-08303 Mataró (Barcelona) (ES)
(74) Representative: Curell Suñol S.L.P.
(86) International application number: PCT/ES2015/070168
(87) International publication number: WO 2015/136136

(56) References cited:
- WO-A1-97/18772
- WO-A1-2008/077443
- JP-A- H05 168 651
- US-A- 5 951 287
- US-A1- 2002 123 022

## Description

### Field of the Invention

The invention is comprised in the field of dental implants.

The invention more specifically relates to a dental prosthetic structure for dental implant, of the type intended for being fixed in a dental implant body or in an analog by means of a fixing screw, said structure comprising:
- an interface part intended for being seated on the body of a dental implant or on an analog, said interface part having a tubular shape with an axial through passage for the passage of the fixing screw;
- a prosthetic element which is coupled at its lower end to the interface part, said prosthetic element having a tubular shape with an axial through passage for the passage of the fixing screw;
- and securing means for securing the prosthetic element to the interface part.

### State of the Art

The dental implants referred to in the invention are of the type comprising a dental implant body which is implanted in the bone of a patient by means of a surgical procedure, and a dental prosthesis which is fixed to the dental implant body by means of screwing, using a fixing screw that is screwed into a threaded hole provided for such purpose in the dental implant body.

The dental prosthesis is a complex element that is custom-made in a laboratory from a dental prosthetic structure and from an impression obtained in the patient's mouth.

The present invention relates to said dental prosthetic structure, understood as a structure from which a dental prosthesis that will ultimately be screwed to the dental implant body housed in the patient's bone is made in a laboratory.

In the present document, the term "prosthetic element" refers to both a support element on which a prosthetic tooth is formed in the laboratory, and to an intermediate element that is used to make various adjustments in said laboratory. A calcinable body and a prosthetic tooth body are two examples of a support element-type prosthetic element, whereas a scanbody is an example of an intermediate element-type prosthetic element.

The term "prosthetic tooth body" refers to a body, such as, for example, a crown or a structure that is typically metallic and which is formed as a single tooth (in the case of a crown) or as a set of teeth (in the case of a structure) by means of milling or by means of sintering, for example, and on which usually a ceramic coating layer is subsequently applied.

The term "analog" refers to a support having a geometry analogous to the geometry of the dental implant body and in which the dental implant structure is fixed in order to work on it in the laboratory.

The process of making the dental prosthesis from a dental prosthetic structure comprises testing phases in the patient's mouth and adjustment phases in the laboratory. To conduct the test in the patient's mouth, the dental prosthetic structure is screwed directly into the dental implant body housed in the patient's bone. In contrast, to perform the operations for forming the dental prosthesis in the laboratory, said dental prosthetic structure is screwed into an analog.

Use of an interface part interposed between the dental implant body and the prosthetic element is a known technique that has the following advantages: it protects the dental implant body against abrasion caused by the ceramic material forming the dental prosthesis; it allows better fit of the dental prosthesis on the dental implant body; and it simplifies the operations necessary for making this adjustment.

Initially the interface part is an independent part forming part of the assembly of parts of the dental prosthetic structure. However, once the dental prosthesis has been formed, said interface part is an integral part of the latter. Before finally forming the dental prosthesis, testing and adjustment phases are carried out during which provisional securing between the interface part and the prosthetic element is necessary. The most commonly used technique for this provisional securing consists of provisionally cementing the two parts, typically by applying points of quick-setting glue, which must then be eliminated in the laboratory before performing the operations of forming the dental prosthesis. To simplify these operations and at the same time improve resulting product quality, the applicant has developed and marketed a new technique that consists of using a securing screw to provisionally secure the interface part to the interface element. This securing screw is introduced in the axial through passage of the prosthetic element and the interface part and is screwed to an inner threading provided in said interface part. The need to provisionally cement the two parts thereby being eliminated, however in contrast, it is necessary to remove said securing screw to enable screwing the dental prosthetic structure to the dental implant body or to the analog by means of the fixing screw.

EP2201908A1 discloses a dental prosthetic structure for implant of the kind indicated above in which the securing means are a screw which is screwed to an inner threading of the interface part and which has a head resting on an inner step of the prosthetic element.

### Summary of the Invention

The objective of the invention is to provide a dental prosthetic structure of the type indicated above which easily allows provisionally securing the interface part to the prosthetic element without having to use glue or other cementing products, and fixing the dental prosthetic structure to the dental implant body or to the analog. An additional objective of the invention consists of improving the quality and integrity of the dental prosthesis that can be made from the dental prosthetic structure.

This objective is achieved by means of a dental prosthetic structure of the type indicated above, characterized in that the securing means for securing the prosthetic element to the interface part consist of a securing element comprising an axial through passage for the passage of the fixing screw and configured for being introduced in the axial through passage of the interface part and in the axial through passage of the prosthetic element for securing said prosthetic element to said interface part, such that the axial through passages of the interface part, the prosthetic element and the securing element are aligned and form a passage for the fixing screw.

As a result of this solution according to the invention, it is no longer necessary to remove the securing element to enable screwing the dental prosthetic structure to the dental implant body or to the analog by means of the fixing screw. In fact, it is possible to leave the securing element assembled in its use position and to pass the fixing screw through the passage formed by the axial passages of the three parts, in order to screw it to the dental implant body or to the analog. The operations that the dentist and laboratory technician must carry out in order to make and install the dental prosthesis are thereby significantly simplified, and perfect integrity of the dental prosthetic structure is furthermore assured as long as the dental prosthesis is not finished. In addition, the solution according to the invention allows removing the securing element after having screwed the dental prosthetic structure to the dental implant body or to the analog, or optionally leaving said securing element permanently assembled. In this last case, the securing element is integrated in the prosthesis, thereby reinforcing the integrity thereof.

Preferred embodiments have been provided based on the invention defined in the main claim, the preferred features of said preferred embodiments being described in the dependent claims.

Although various technical solutions for the securing element to effectively secure the prosthetic element to the interface part can be envisaged according to the invention, in preferred embodiments the securing element is a tubular screw that is screwed into the interface part. Securing by means of screwing is a technique that has been used in dental prosthetic structures marketed by the applicant, whereby it is possible to implement the invention in a particularly easy manner by means of replacing the previously used solid securing screw with a tubular securing through screw, which allows the passage of the fixing screw.

The tubular screw preferably comprises an outer rib that rests against a corresponding inner rib provided in the prosthetic element, and said tubular screw comprises at its lower end an outer threading that is screwed into a corresponding inner threading provided in the interface part. This particular solution allows making the securing element with a simple and easy-to-machine configuration, and provides robust provisional securing assuring assembly integrity.

The tubular screw is preferably a cylindrical part having a reduction in outer diameter between an upper segment and a lower segment having a smaller outer diameter, the outer threading being formed in said lower segment, and the outer rib consisting of an annular step formed by said reduction in outer diameter. This solution allows making the securing element with a particularly simple and easy-to-machine configuration, which is a significant advantage, taking into account that this part is preferably made of a titanium alloy.

In preferred embodiments, a lower segment of the prosthetic element located right below the inner rib has an inner width greater than the inner width of the prosthetic element at the level of said inner rib, thereby forming a recess in which an upper segment of the interface part is housed, such that said upper segment of the interface part does not project inwardly with respect to said inner rib. This solution has the advantage of not limiting inner space, which allows more easily housing the securing element such that a wide axial passage is left for the passage of the securing screw.

The tubular screw preferably comprises open notches made at the upper end of its tubular wall. These notches are intended for being coupled by form fit connection to corresponding shapes of a screw wrench, which is used for screwing the fixing screw through the passage formed by the axial passages of the prosthetic element, the interface part and the tubular screw.

The notches are preferably arranged at regular intervals along the circumference of the tubular wall of the tubular screw, which allows particularly easy coupling of the screw wrench and provides good stability to the coupling.

The interface part is advantageously a one-piece metal element made of a biocompatible material, preferably a grade 5 titanium alloy (Ti-6Al-4V alloy).

The securing element is advantageously a one-piece metal element made of a biocompatible material, preferably a grade 5 titanium alloy (Ti-6Al-4V alloy).

In some embodiments, the prosthetic element is a calcinable body. As it is known in the state of the art, a calcinable body is a body made of calcinable material, particularly a polymer which can be transformed into a metal alloy, particularly a Cr-Co alloy, by means of a physicochemical process, thereby obtaining a metal alloy part that quite accurately reproduces the shape of the initial calcinable body and on which a crown is molded, cemented to said metal alloy part.

In other embodiments, the prosthetic element is a scanbody. As it is also known in the state of the art, a scanbody is an intermediate accessory that is used in a scanning phase of a CAD-CAM method and it essentially serves to reproduce in the laboratory the angle of emergence of the implant and to establish a height reference on the basis of which a crown starts to be molded by means of a CAD-CAM method.

In other embodiments, the prosthetic element is a prosthetic tooth body, such as a crown of a single tooth or a multiple teeth structure, for example, formed by means of milling or by means of sintering, for example. As it is also known in the state of the art, such prosthetic tooth body is a body made of a metal alloy, preferably a Cr-Co alloy or a zirconium alloy, which is machined by means of precision milling or molded by means of sintering, to give it the shape of a prosthetic tooth or the shape of a multiple prosthetic teeth structure, and it is subsequently coated with a layer of ceramic cemented in said body.

The interface part preferably comprises at its lower end a skirt intended for being internally coupled to the upper end of a dental implant body or an analog, said skirt externally forming at its lower end an annular shoulder against which the end of a lower segment of the prosthetic element rests. This solution makes placing prosthetic element easier and provides good seating for same. More preferably, at the level of said end of the lower segment of the prosthetic element, the outer wall of the latter projects outwardly with respect to the annular shoulder of the interface part, so that the interface part is not visible in the patient's mouth.

In embodiments particularly suitable for single unit restoration prostheses (restoration with a single implant), outer recesses are provided in the skirt of the interface part which are coupled to corresponding inner projections provided in the lower segment of the prosthetic element, such that this coupling prevents rotation of the prosthetic element with respect to the interface part. At least one of said outer recesses in the skirt of the interface part is preferably different from the rest, and at least one corresponding inner projection out of said inner projections provided in the lower segment of the prosthetic element is different from the rest in order to force the prosthetic element to always be placed in a specific angular position with respect to the interface part.

In other embodiments which are particularly suitable for multiple unit restoration prostheses (restoration with several implants), the skirt of the interface part forms a smooth surface of revolution on the outer face thereof, and the lower segment of the prosthetic element forms a corresponding smooth surface of revolution on the inner face thereof, so that the prosthetic element may adopt any angular position with respect to the interface part. This configuration makes the operation of fitting with the interface parts in the case of multiple unit restoration easier, where one and the same dental prosthesis comprises several prosthetic elements which must be fixed respectively to several dental implant bodies.

The invention also covers other detail features illustrated in the detailed description of embodiments of the invention and in the attached drawings.

### Brief Description of the Drawings

The advantages and features of the invention can be seen from the following description in which preferred embodiments of the invention are described in reference to the drawings in a non-limiting manner with respect to the scope of the main claim.
Figure 1 is an exploded perspective view, sectioned by a mid-plane, of a first embodiment of a dental prosthetic structure according to the invention, formed by an interface part, a prosthetic element and a securing element. The drawing also shows an analog and a fixing screw. In this case, the prosthetic element is a calcinable body, which fits with the interface part in an antirotational manner.
Figure 2 is a view corresponding to Figure 1, with all the elements assembled.
Figure 3 is a front detail view showing, on a larger scale, the area of Figure 3 in which the securing element is located and the coupling between, on one hand, the prosthetic element and the interface part, and on the other hand, the interface part and the analog.
Figure 4 is a view corresponding to Figure 2, without the fixing screw and the analog, which are not part of the structure according to the invention *per se.*
Figures 5, 6 and 7 are, respectively, a perspective view, a top view and a sectioned side view of the interface part.
Figures 8 and 9 are, respectively, a perspective view and a sectioned side view of the securing element.
Figures 10, 11 and 12 are, respectively, a perspective view, a bottom view and a sectioned side view of the prosthetic element.
Figures 13, 14 and 15 are, respectively, a perspective view, a top view and a sectioned side view of a variant of the interface part in a second embodiment. In this case, the prosthetic element is a calcinable body which fits in a rotational manner with the interface part.
Figures 16, 17 and 18 are, respectively, a perspective view, a bottom view and a sectioned side view of a variant of the prosthetic element corresponding to the calcinable body of the second embodiment.
Figures 19 and 20 are, respectively, a perspective view and a corresponding sectioned view of a scanbody, as a prosthetic element, for antirotational fit with the interface part.
Figures 21 and 22 are, respectively, a perspective view and a corresponding sectioned view of a scanbody, as a prosthetic element, for rotational fit with the interface part.
Figures 23 and 24 are, respectively, a perspective view and a corresponding sectioned view of a milled crown, as a prosthetic element, for antirotational fit with the interface part.

### Detailed Description of Embodiments of the Invention

In the drawings, reference numbers 5A, 5B and 5C refer to three possible different forms, among others, of the prosthetic element 5, respectively: a calcinable body 5A, a scanbody 5B and a prosthetic tooth body, the latter consisting specifically of a milled crown 5C. In the first two cases 5A, 5B, a first variant intended for single unit repairs has been depicted, in which the fit between the interface part 2 and the prosthetic element 5A, 5B is antirotational, and a second variant for multiple unit repairs has been depicted, in which the fit between the interface part 2' and the prosthetic element 5A', 5B' is rotational.

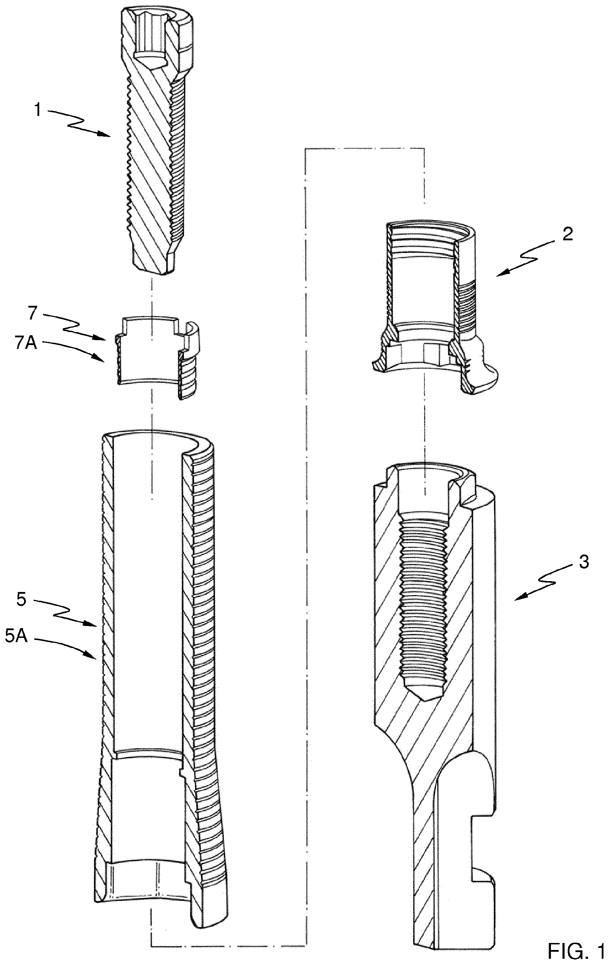

Figures 1 to 12 show a first embodiment of the dental prosthetic structure according to the invention, formed by an interface part 2, a prosthetic element 5 and a securing element 7. Said drawings also show an analog 3 and a fixing screw 1. In this embodiment, the prosthetic element 5 is a calcinable body 5A, which fits in the interface part 2 without the possibility of rotating with respect to same. As previously stated, this antirotational coupling between the prosthetic element 5, 5A and the interface part 2 is appropriate for single unit repairs.

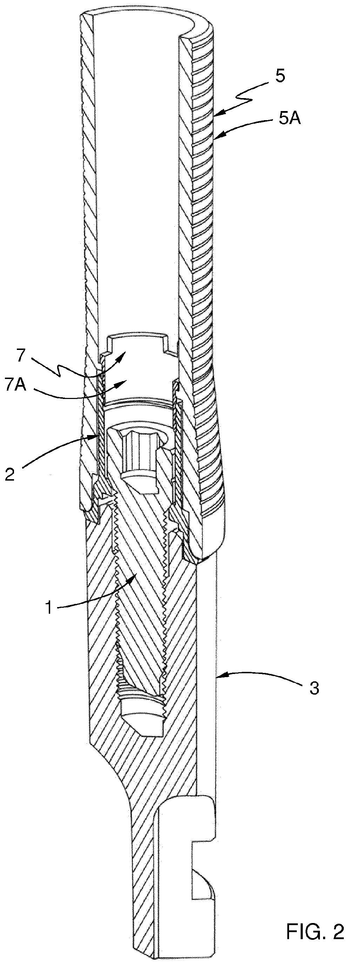

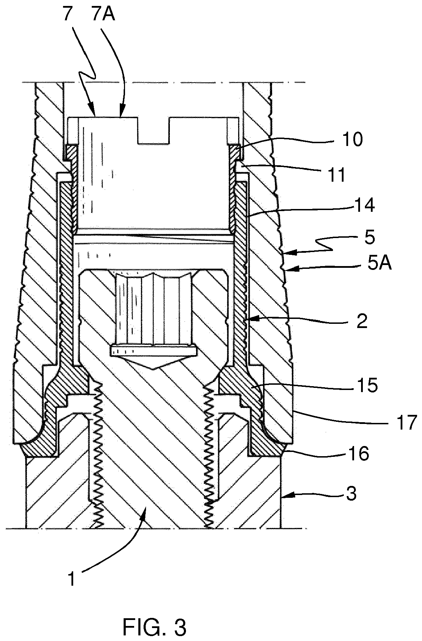

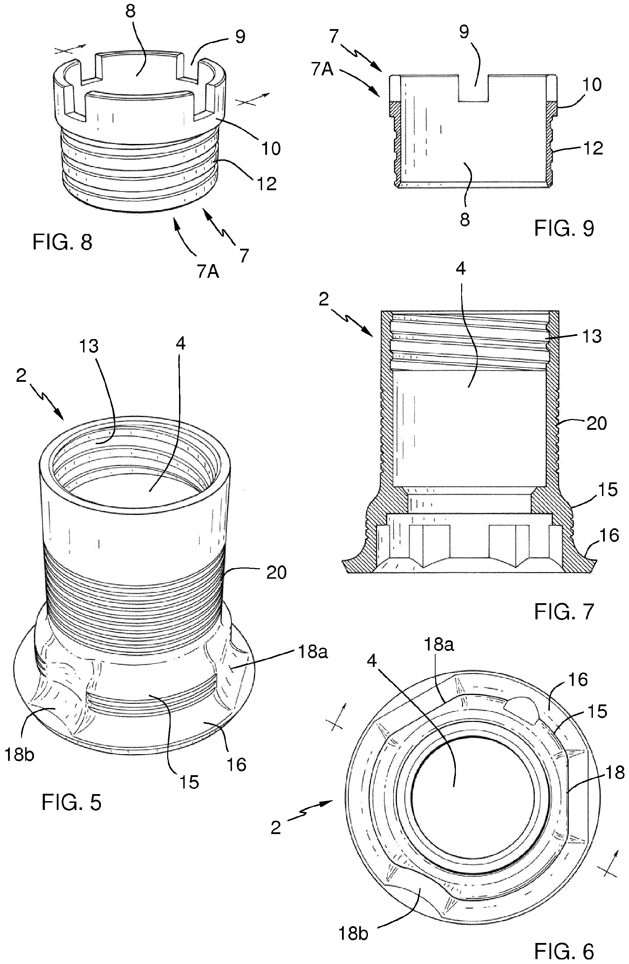

The coupling of all the parts can be seen in Figure 2. The interface part 2 is seated on the analog 3, as shown in Figures 2 and 3, or likewise on the body of a dental implant (not depicted) in a patient's mouth. The interface element 5, which is a calcinable body 5A in this case, is externally coupled by the lower end thereof to the interface part 2. The securing element 7, consisting of a tubular screw 7A in this example, is screwed into the interface part 2 to secure the prosthetic element 5, 5A thereto. The fixing screw 1 is screwed into the analog 3 or into the dental implant body in order to fix the dental prosthetic structure thereto. As can be seen in Figure 2, and as shown in further detail for each part in Figures 8 to 12, the prosthetic element 5, 5A, the interface part 2 and the tubular screw 7A forming the securing element 7 are all tubular parts, each comprising a through passage 4, 8 and 6, respectively, for the passage of the fixing screw 1, such that when these three parts are assembled in the position shown in Figures 2 and 3, in which the tubular screw 7A is screwed to the interface part 2 for securing the prosthetic element 5, 5A thereto, the respective through passages 4, 8, 6 of said three parts are aligned forming a passage to allow passage of said fixing screw 1.

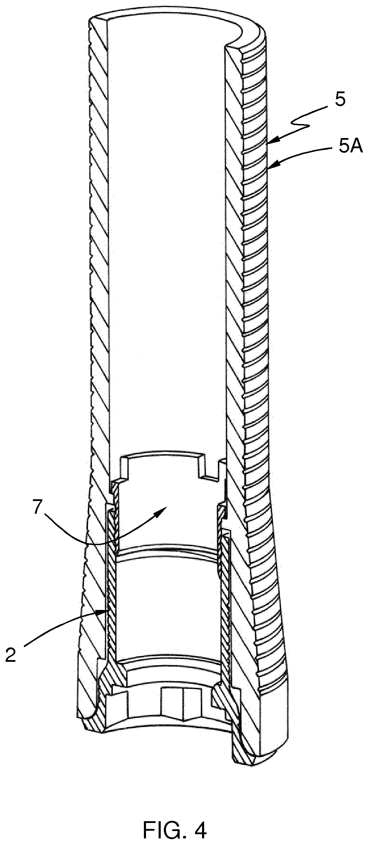

Since the fixing screw 1 can be introduced and removed through the passage formed by the through passages 4, 8, 6, and since the head of said fixing screw 1 is therefore accessible through said through passages 4, 8, 6 for screwing in/unscrewing same, it is not necessary to act on the securing screw 7A to fix/unfix the assembly of Figure 4 to/from the analog 3 or to/from the dental implant body by means of the fixing screw 1. This is an great advantage with respect to systems used up until now.

On the other hand, it will be observed that the assembly of Figure 4 can be easily made by first placing the interface part 2 seated on the analog 3 or on the dental implant body, then coupling the interface element 5, 5A to the interface part 2, and finally introducing the through screw 7A and screwing it to the interface part 2. The assembly thus formed is an integral assembly that can be removed from its seating in the analog 3 or in the dental implant body for being transferred from the laboratory to a patient's mouth and vice versa, and as has been seen, it can be easily fixed by means of the fixing screw 1 to the analog 3 or to the dental implant body without having to act on the tubular screw 7A.

Figures 8 and 9 show the securing element 7 made up of the tubular screw 7A in further detail. It is a cylindrical one-piece metal element made of a biocompatible material, specifically a grade 5 titanium alloy. A lower segment thereof has a reduced outer diameter with respect to an upper segment and is provided with an outer threading 12 intended for be screwed in a corresponding inner threading 13 provided in the interface part 2 (Figures 5 and 6). The reduction in outer diameter between these upper and lower segments forms an annular step constituting an outer rib 10, intended for resting against a corresponding inner rib 11 provided in the prosthetic element 5, 5A. By means of resting the upper rib 10 against the inner rib 11 when the tubular screw 7A is screwed to the interface part 2 the prosthetic element 5, 5A is strongly secured to the said interface part 2 (see Figures 3 and 4).

Additionally, open notches 9 intended for coupling a complementary screwing tool (not depicted) are formed at the upper end of the tubular wall of the tubular screw 7A. Four identical rectangular notches 9 arranged at regular intervals along the circumference of the tubular wall of the tubular screw 7A have been provided in the preferred example described herein.

The interface part 2 is depicted in further detail in Figures 5 to 7. It is also a cylindrical one-piece metal element made of a biocompatible material, specifically a grade 5 titanium alloy. The upper portion of the part is a cylindrical segment that is provided on the inner wall with the mentioned inner threading 13 into which the corresponding outer threading 12 of the tubular screw 7A is screwed, and on the outer wall with retaining grooves 20 intended for retaining the prosthetic element 5, 5A by friction. The lower end has a skirt 15 intended for being internally coupled to the upper end of the analog 3 or the dental implant body. The skirt 15 externally forms an annular shoulder 16 at its lower end intended for receiving the resting of the end of a lower segment 17 of the prosthetic element 5, 5A, as can be seen in Figure 3. The same drawing also shows that at the level of said end of the lower segment 17 of the prosthetic element 5, 5A, the outer wall of the latter projects outwardly with respect to the annular shoulder 16 of the interface part 2. Furthermore, the skirt 15 is provided with outer recesses 18a, 18b which are coupled to corresponding inner projections 19a, 19b provided in the lower segment 17 of the prosthetic element 5, 5A, so that the coupling between the prosthetic element 5, 5A and the interface part 2 is antirotational, i.e., it prevents relative rotation between these two parts. In order to force the prosthetic element 5, 5A to always be placed at a specific angular position with respect to the interface part 2, one recess 18b of said outer recesses in the skirt 15 is different from the rest of the recesses 18a, and it corresponds with one inner projection 19b of said inner projections 19a, 19b of the lower segment 17 of the prosthetic element 5, 5A, which is also different from the rest of the inner projections 19a.

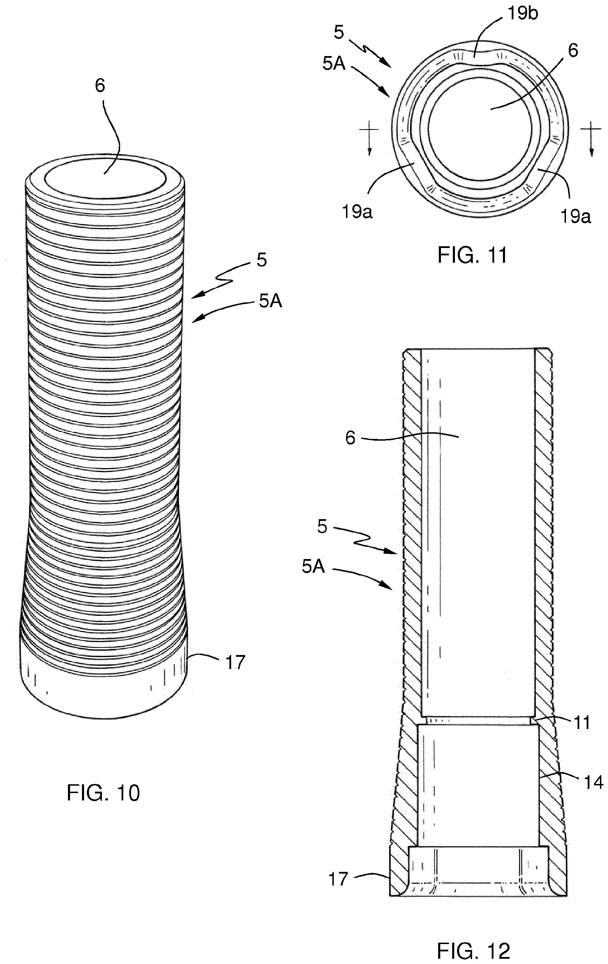

Finally, Figures 10 to 12 show the prosthetic element 5, which is a calcinable body 5A in this case, in further detail. It is an overall cylindrical part made of a polymer, such as polyoxymethylene (POM), for example, suitable for being transformed into a Cr-Co alloy by means of a calcination process known by the person skilled in the art. The inner rib 11 described above intended for receiving the resting of the outer rib 10 of the tubular screw 7A is formed by a cylindrical annular rib, as can be seen in Figure 12. As seen in Figure 11, the inner projections 19a, 19b, also described above, that are complementary to the outer recesses 18a, 18b of the interface part 2, are formed in the inner portion of the lower segment 17. Furthermore, as shown in Figure 12, the prosthetic element 5, 5A has a lower segment 14 located right below the inner rib 11, having an inner diameter greater than the inner diameter of said inner rib 11, thereby forming a recess in which an upper segment of the interface part 2 is housed, as can be seen in Figure 3. The thickness of the tubular wall of this upper segment of the interface part 2 is such that said tubular wall does not project inwardly with respect to the inner rib 11. As a result, the tubular screw 7A can have a maximum inner diameter, limited only by the inner rib 11, which can be very small, and by the actual thickness of the wall of the tubular screw 7A, which can also be very small. All of this is done so that the inner diameter is as large as possible to allow passage of the head of the fixing screw 1.

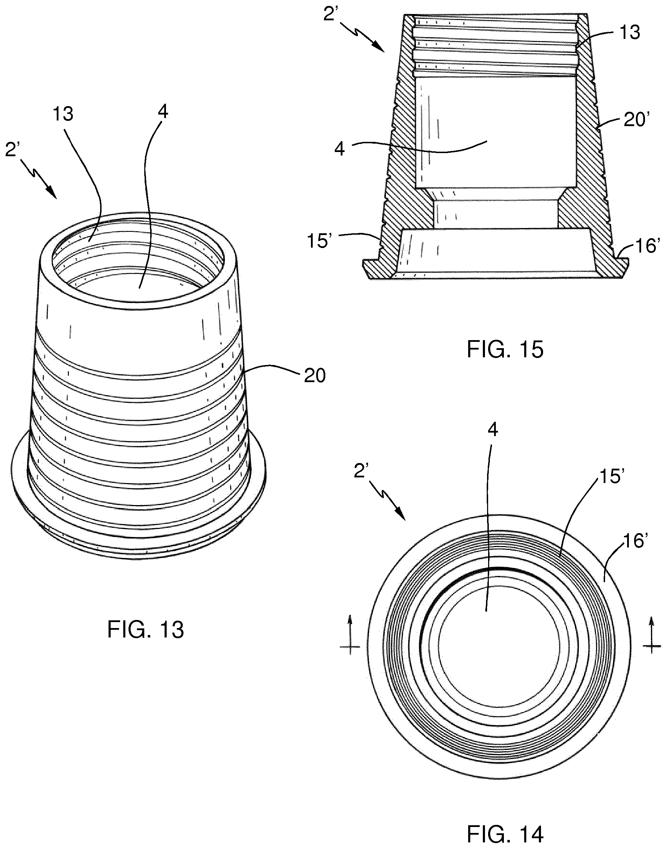

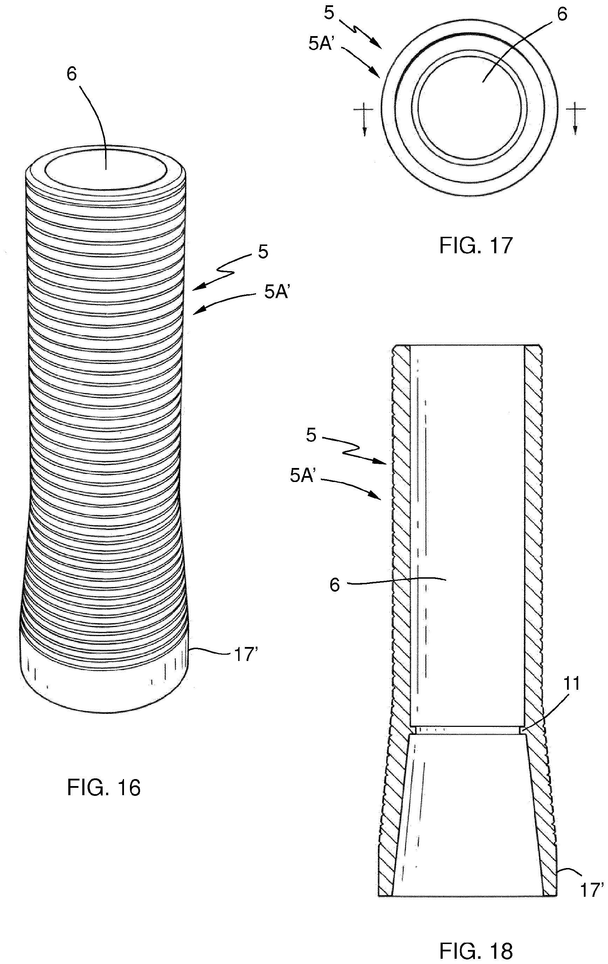

Figures 13 to 18 show another embodiment intended for multiple unit repairs, in which the dental prosthetic structure is designed such that the fit between the prosthetic element 5 and the interface part 2' is a rotational fit which allows relative rotation between these two parts when they are not secured to one another by the securing screw 7A. The prosthetic element 5 is a calcinable body 5A' secured to the interface part 2' using the same securing screw 7A as in the preceding embodiment. The only substantial differences with respect to the preceding embodiment can be found in parts 2' and 5A', and these differences are the following: the outer surface of the interface part 2' has a conical shape that is complementary to a conical shape of the inner surface of the lower segment 17' of the prosthetic element 5, 5A'; the skirt 15' is lacking antirotational recesses and has at its lower end a straight lip 16'; and the inner wall of the lower segment 17' of the prosthetic element 5, 5A' is also lacking antirotational ribs.

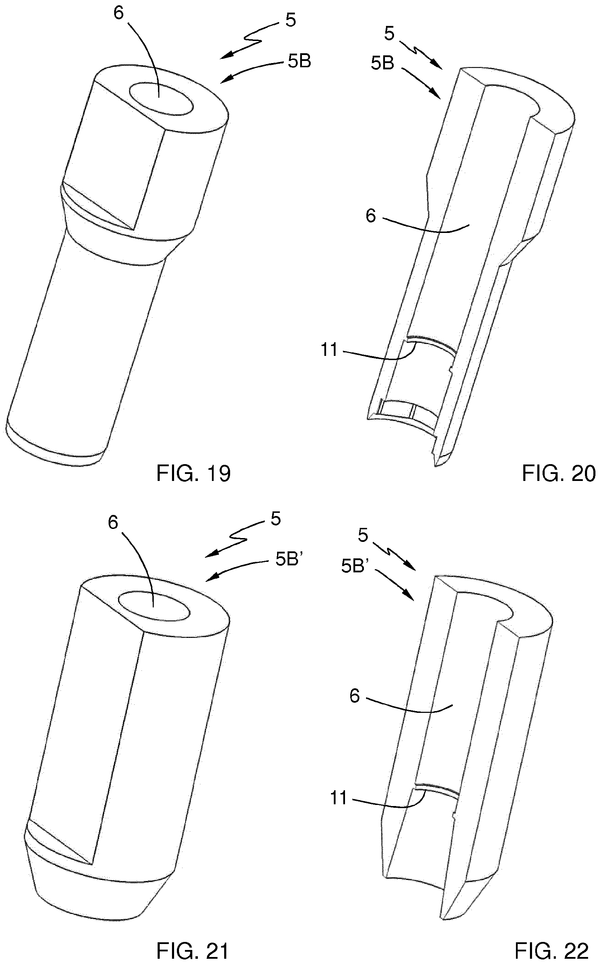

Figures 19 and 20 show an example of a scanbody 5B, as the prosthetic element 5, for antirotational fit with the interface part 2. This scanbody 5B fits in the same interface part 2 as the calcinable body 5A and has the same configuration as the latter in relation to the portions involved in said fit, and in relation to the portions involved in receiving the same tubular screw 7A.

Figures 21 and 22 show a variant of the scanbody 5B', as the prosthetic element 5, for rotational fit with the interface part 2'. This scanbody 5B' fits in the same interface part 2' as the calcinable body 5A' and has the same configuration as the latter in relation to the portions involved in said fit, and in relation to the portions involved in receiving the same tubular screw 7A.

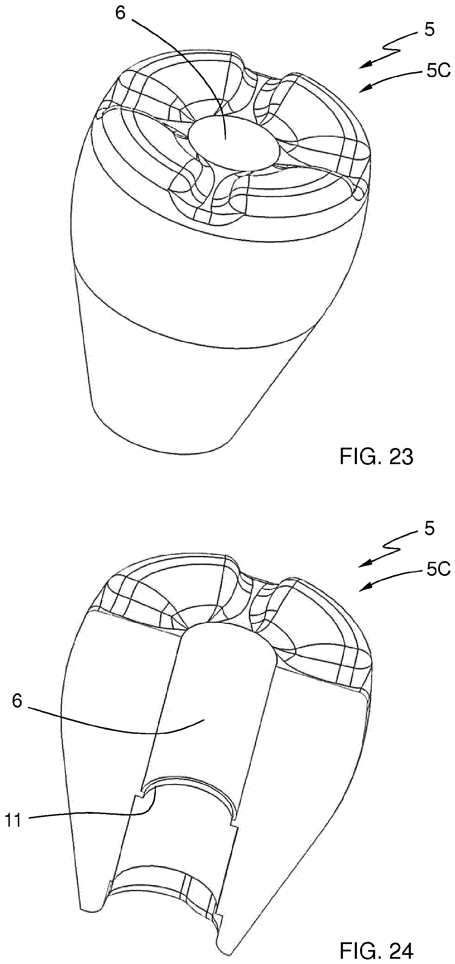

Finally, Figures 23 and 24 show an example of a prosthetic tooth body, specifically a milled crown 5C, as the prosthetic element 5, for antirotational fit with the interface part 2. This milled crown 5C, made of a Cr-Co alloy, fits in the same interface part 2 as the calcinable body 5A and the scanbody 5B and has the same configuration as the latter in relation to the portions involved in said fit and in relation to the portions involved in receiving the same tubular screw 7A.

The prosthetic tooth body can also consist of a structure (not depicted) comprising several teeth for multiple unit restorations which fits in the same interface part 2' as the calcinable body 5A' and has the same configuration as the latter in relation to the portions involved in said fit and in relation to the portions involved in receiving the same tubular screw 7A.

The skilled person will recognize that there are a number of possible variants without departing from the scope of the main claim. It will particularly be observed that although three possible cases of a prosthetic element 5 (a calcinable body 5A, 5A', a molding body 5B, 5B' and prosthetic tooth body, specifically a milled crown, 5C) have been described by way of example, the invention is not limited to such examples. In fact, the prosthetic element 5 can consist of any other part which, during a process of making a dental prosthesis, must be secured to the interface part 2, 2' by means of the securing element in order to form an integral assembly that is fixed and unfixed by means of a fixing screw to/from an analog or a dental implant body in a patient's mouth. For example, the prosthetic element 5 can be an interface reader of the type used for reproducing a crown by means of a pantograph. It will also be observed that the interface part 2, 2' can have a shape other than those that are depicted, particularly the lower portion thereof, which can be formed so as to adapt to different types of analogs or dental implant bodies.

## Claims

1. A dental prosthetic structure for implant, intended for being fixed in a dental implant body or in an analog (3) by means of a fixing screw (1), said structure comprising:
- an interface part (2, 2') intended for being seated on the body of a dental implant or on an analog (3), said interface part (2, 2') having a tubular shape with an axial through passage (4) for the passage of said fixing screw (1);
- a prosthetic element (5) which is coupled at its lower end to said interface part (2, 2'), said prosthetic element (5) having a tubular shape with an axial through passage (6), aligned with said through passage (4) of said interface part (2, 2'), for the passage of said fixing screw (1);
- and securing means consisting in a securing element (7) configured for being introduced in said axial through passage (4) of said interface part (2, 2') and in said axial through passage (6) of said prosthetic element (5) for securing said prosthetic element (5) to said interface part (2, 2');
**characterized in that** said securing element (7) comprises an axial through passage (8) for the passage of said fixing screw (1); said securing element (7) that comprises said axial through passage (8) being configured such that, when said securing element (7) is introduced in said axial through passage (4) of said interface part (2, 2') and in said axial through passage (6) of said prosthetic element (5) for securing said prosthetic element (5) to said interface part (2, 2'), said axial through passages (4, 6, 8) of said interface part (2, 2'), said prosthetic element (5) and said securing element (7) are aligned and form a passage for said fixing screw (1).

2. The dental prosthetic structure according to claim 1, **characterized in that** said securing element (7) is a tubular screw (7A) that is screwed into said interface part (2, 2').

3. The dental prosthetic structure according to claim 2, **characterized in that** said tubular screw (7A) comprises an outer rib (10) that rests against a corresponding inner rib (11) provided in said prosthetic element (5); and said tubular screw (7A) comprises an outer threading (12) at its lower end that is screwed into a corresponding inner threading (13) provided in said interface part (2, 2').

4. The dental prosthetic structure according to claim 3, **characterized in that** said tubular screw (7A) is a cylindrical part having a reduction in outer diameter between an upper segment and a lower segment having a smaller outer diameter, said outer threading (12) being formed in said lower segment, and said outer rib (10) consists of an annular step formed by said reduction in outer diameter.

5. The dental prosthetic structure according to claim 3 or 4, **characterized in that** a lower segment (14) of said prosthetic element (5) located right below said inner rib (11) has an inner width that is greater than the inner width of the prosthetic element (5) at the level of said inner rib (11), thereby forming a recess in which an upper segment of said interface part (2, 2') is housed, such that said upper segment of said interface part (2, 2') does not project inwardly with respect to said inner rib (11).

6. The dental prosthetic structure according to any of claims 2 to 5, **characterized in that** said tubular screw (7A) comprises open notches (9) made at the upper end of the tubular wall of said tubular screw (7A).

7. The dental prosthetic structure according to claim 6, **characterized in that** said notches (9) are arranged at regular intervals along the circumference of the tubular wall of said tubular screw (7A).

8. The dental prosthetic structure according to any of claims 1 to 7, **characterized in that** said interface part (2, 2') is a one-piece metal element made of a biocompatible material, preferably a grade 5 titanium alloy.

9. The dental prosthetic structure according to any of claims 1 to 8, **characterized in that** said securing element (7) is a one-piece metal element made of a biocompatible material, preferably a grade 5 titanium alloy.

10. The dental prosthetic structure according to any of claims 1 to 9, **characterized in that** said prosthetic element (5) is a calcinable body (5A, 5A').

11. The dental prosthetic structure according to any of claims 1 to 9, **characterized in that** said prosthetic element (5) is a scanbody (5B, 5B').

12. The dental prosthetic structure according to any of claims 1 to 9, **characterized in that** said prosthetic element (5) is a prosthetic tooth body (5C).

## Patentansprüche

1. Zahnprothesenstruktur für Implantate, die dazu bestimmt sind, in einem Zahnimplantatkörper oder in einem Analogon (3) mittels einer Befestigungsschraube (1) befestigt zu werden, wobei die Struktur umfasst:
- ein Schnittstellenteil (2, 2'), das dazu bestimmt ist, auf dem Körper eines Zahnimplantats oder auf einem Analogon (3) zu sitzen, wobei das Schnittstellenteil (2, 2') eine rohrförmige Gestalt mit einem axialen Durchgang (4) für den Durchlass der Befestigungsschraube (1) aufweist;
- ein Prothesenelement (5), das an seinem unteren Ende mit dem Schnittstellenteil (2, 2') gekoppelt ist, wobei das Prothesenelement (5) eine rohrförmige Gestalt mit einem axialen Durchgang (6) hat, der mit dem Durchgang (4) des Schnittstellenteils (2, 2') für den Durchlass der Befestigungsschraube (1) fluchtet;
- und einem Sicherungsmittel, das aus einem Sicherungselement (7) besteht, das angepasst ist, in den axialen Durchgang (4) des Schnittstellenteils (2, 2') und in den axialen Durchgang (6) des Prothesenelements (5) eingeführt zu werden, um das Prothesenelement (5) an dem Schnittstellenteil (2, 2') zu sichern;
**dadurch gekennzeichnet, dass** das Sicherungselement (7) einen axialen Durchgang (8) für den Durchlass der Befestigungsschraube (1) umfasst; wobei das Sicherungselement (7), das den axialen Durchgang (8) umfasst, derart konfiguriert ist, dass, wenn das Sicherungselement (7) in den axialen Durchgang (4) des Schnittstellenteils (2, 2') und in den axialen Durchgang (6) des Prothesenelements (5) eingeführt ist, um das Prothesenelement (5) an dem Schnittstellenteil (2, 2') zu sichern, die axialen Durchgänge (4, 6, 8) des Schnittstellenteils (2, 2'), des Prothesenelements (5) und des Sicherungselements (7) fluchten und einen Durchlass für die Befestigungsschraube (1) bilden.

2. Zahnprothesenstruktur nach Anspruch 1, **dadurch gekennzeichnet, dass** das Sicherungselement (7) eine in das Schnittstellenteil (2, 2') eingeschraubte rohrförmige Schraube (7A) ist.

3. Zahnprothesenstruktur nach Anspruch 2, **dadurch gekennzeichnet, dass** die rohrförmige Schraube (7A) eine äußere Rippe (10) umfasst, die an einer entsprechenden inneren Rippe (11) anliegt, die in dem Prothesenelement (5) vorgesehen ist; wobei die rohrförmige Schraube (7A) an ihrem unteren Ende ein Außengewinde (12) umfasst, das in ein entsprechendes Innengewinde (13) eingeschraubt ist, das in dem Schnittstellenteil (2, 2') vorgesehen ist.

4. Zahnprothesenstruktur nach Anspruch 3, **dadurch gekennzeichnet, dass** die rohrförmige Schraube (7A) ein zylindrisches Teil ist, das eine Verringerung des Außendurchmessers zwischen einem oberen Segment und einem unteren Segment mit einem kleineren Außendurchmesser aufweist, wobei das Außengewinde (12) an dem unteren Segment ausgebildet ist, und die äußere Rippe (10) aus einer ringförmigen Stufe besteht, die durch die Verringerung des Außendurchmessers ausgebildet ist.

5. Zahnprothesenstruktur nach Anspruch 3 oder 4, **dadurch gekennzeichnet, dass** ein unteres Segment (14) des Prothesenelements (5), das direkt unterhalb der inneren Rippe (11) angeordnet ist, eine Innenweite aufweist, die größer ist als die Innenweite des Prothesenelements (5) auf Höhe der inneren Rippe (11), wodurch eine Ausnehmung ausgebildet ist, in welcher ein oberes Segment des Schnittstellenteils (2, 2') aufgenommen ist, so dass das obere Segment des Schnittstellenteils (2, 2') in Bezug auf die innere Rippe (11) nicht nach innen vorsteht.

6. Zahnprothesenstruktur nach einem der Ansprüche 2 bis 5, **dadurch gekennzeichnet, dass** die rohrförmige Schraube (7A) offene Kerben (9) umfasst, die am oberen Ende der rohrförmigen Wand der rohrförmigen Schraube (7A) ausgebildet sind.

7. Zahnprothesenstruktur nach Anspruch 6, **dadurch gekennzeichnet, dass** die Kerben (9) in regelmäßigen Abständen entlang des Umfangs der Rohrwandung der rohrförmigen Schraube (7A) angeordnet sind.

8. Zahnprothesenstruktur nach einem der Ansprüche 1 bis 7, **dadurch gekennzeichnet, dass** das Schnittstellenteil (2, 2') ein einstückiges Metallelement ist, das aus einem biokompatiblen Material, vorzugsweise einer Titanlegierung des Typs 5, gemacht ist.

9. Zahnprothesenstruktur nach einem der Ansprüche 1 bis 8, **dadurch gekennzeichnet, dass** das Sicherungselement (7) ein einstückiges Metallelement ist, das aus einem biokompatiblen Material, vorzugsweise einer Titanlegierung des Typs 5, gemacht ist.

10. Zahnprothesenstruktur nach einem der Ansprüche 1 bis 9, **dadurch gekennzeichnet, dass** das Prothesenelement (5) ein kalzinierbarer Körper (5A, 5A') ist.

11. Zahnprothesenstruktur nach einem der Ansprüche 1 bis 9, **dadurch gekennzeichnet, dass** das Prothesenelement (5) ein Scankörper (5B, 5B') ist.

12. Zahnprothesenstruktur nach einem der Ansprüche 1 bis 9, **dadurch gekennzeichnet, dass** das Prothesenelement (5) ein prothetischer Zahnkörper (5C) ist.

## Revendications

1. Structure prothétique dentaire pour implant, destinée à être fixée dans un corps d'implant dentaire ou dans un analogue (3) au moyen de vis de fixation (1), ladite structure comprenant:
- une partie interface (2, 2') destinée à être en assise sur le corps d'un implant dentaire ou sur un analogue (3), ladite partie interface (2, 2') ayant une forme tubulaire avec un passage axial débouchant (4) pour le passage de ladite vis de fixation (1) ;
- un élément prothétique (5) qui est accouplé à son extrémité inférieure à ladite partie interface (2, 2'), ledit élément prothétique (5) ayant une forme tubulaire avec un passage axial débouchant (6), aligné avec ledit passage débouchant (4) de ladite partie interface (2, 2'), pour le passage de ladite vis de fixation (1) ;
- et un moyen d'attache consistant en un élément d'attache (7) configuré pour être introduit dans ledit passage axial débouchant (4) de ladite partie interface (2, 2') et dans ledit passage axial débouchant (6) dudit élément prothétique (5) pour attacher ledit élément prothétique (5) à ladite partie interface (2, 2') ;
**caractérisé en ce que** ledit élément d'attache (7) comprend un passage axial débouchant (8) pour le passage de ladite vis de fixation (1); ledit élément d'attache (7) qui comprend ledit passage axial débouchant (8) étant configuré de façon que, quand ledit élément d'attache (7) est introduit dans ledit passage axial débouchant (4) de ladite partie interface (2, 2') et dans ledit passage axial débouchant (6) dudit élément prothétique (5) pour attacher ledit élément prothétique (5) à ladite partie interface (2, 2'), lesdits passages axiaux débouchants (4, 6, 8) de ladite partie interface (2, 2') dudit élément prothétique (5) et dudit élément d'attache (7) soient alignés et forment un passage pour ladite vis de fixation (1).

2. Structure prothétique dentaire selon la revendication 1, **caractérisée en ce que** ledit élément d'attache (7) est une vis tubulaire (7A) qui est vissée dans ladite partie interface (2, 2').

3. Structure prothétique dentaire selon la revendication 2, **caractérisée en ce que** ladite vis tubulaire (7A) comprend une nervure externe (10) qui repose contre une nervure interne correspondante (11) fournie dans ledit élément prothétique (5); et ladite vis tubulaire (7A) comprend un filetage externe (12) à son extrémité inférieure qui est vissé dans un filetage interne correspondant (13) fourni dans ladite partie interface (2, 2').

4. Structure prothétique dentaire selon la revendication 3, **caractérisée en ce que** ladite vis tubulaire (7A) est une partie cylindrique présentant une réduction de diamètre externe entre un segment supérieur et un segment inférieur ayant un diamètre externe plus petit, ledit filetage externe (12) étant formé dans ledit segment inférieur, et ladite nervure externe (10) consistant en une marche annulaire formée par ladite réduction de diamètre externe.

5. Structure prothétique dentaire selon la revendication 3 ou 4, **caractérisée en ce qu'**un segment inférieur (14) dudit élément prothétique (5) situé juste en dessous de ladite nervure interne (11) présente une largeur interne qui est supérieure à la largeur interne de l'élément prothétique (5) au niveau de ladite nervure interne (11), pour ainsi former un renfoncement dans lequel un segment supérieur de ladite partie interface (2, 2') est logé, de sorte que ledit segment supérieur de ladite partie interface (2, 2') ne se projette pas vers l'intérieur par rapport à ladite nervure interne (11).

6. Structure prothétique dentaire selon l'une quelconque des revendications 2 à 5, **caractérisée en ce que** ladite vis tubulaire (7A) comprend des encoches ouvertes (9) faites à l'extrémité supérieure de la paroi tubulaire de ladite vis tubulaire (7A).

7. Structure prothétique dentaire selon la revendication 6, **caractérisée en ce que** lesdites encoches (9) sont agencées à des intervalles réguliers le long de la circonférence de la paroi tubulaire de ladite vis tubulaire (7A).

8. Structure prothétique dentaire selon l'une quelconque des revendications 1 à 7, **caractérisée en ce que** ladite partie interface (2, 2') est un élément métallique d'une seule pièce fait d'un matériau biocompatible, de préférence un alliage de titane de grade 5.

9. Structure prothétique dentaire selon l'une quelconque des revendications 1 à 8, **caractérisée en ce que** ledit élément d'attache (7) est un élément métallique d'une seule pièce fait d'un matériau biocompatible, de préférence un alliage de titane de grade 5.

10. Structure prothétique dentaire selon l'une quelconque des revendications 1 à 9, **caractérisée en ce que** ledit élément prothétique (5) est un corps calcinable (5A, 5A').

11. Structure prothétique dentaire selon l'une quelconque des revendications 1 à 9, **caractérisée en ce que** ledit élément prothétique (5) est un scanbody (5B, 5B').

12. Structure prothétique dentaire selon l'une quelconque des revendications 1 à 9, **caractérisée en ce que** ledit élément prothétique (5) est un corps de dent prothétique (5C).
